# EUROPÄISCHE PATENTSCHRIFT

(11) **EP 0 733 224 B1**
(45) Veröffentlichungstag und Bekanntmachung des Hinweises auf die Patenterteilung: **11.03.1998**
(21) Anmeldenummer: 95903758.1
(22) Anmeldetag: 09.12.1994
(51) Int. Cl.: G02B 6/42, H01S 3/25, H01L 27/00, H01L 31/12

(54) **ELEKTROOPTISCHES MODUL**
ELECTRO-OPTICAL MODULE
MODULE ELECTRO-OPTIQUE

(30) Priorität: 10.12.1993 DE 4342844
(43) Veröffentlichungstag der Anmeldung: 25.09.1996
(73) Patentinhaber: SIEMENS AKTIENGESELLSCHAFT, 80333 München (DE)
(72) Erfinder: HONSBERG, Martin ,Dr., D-83359 Hufschlag (DE); PLICKERT, Volker, D-14656 Brieselang (DE); KROPP, Jörg-Reinhardt,Dr., D-12355 Berlin (DE)
(86) Internationale Anmeldenummer: DE9401520
(87) Internationale Veröffentlichungsnummer: WO9516217

(56) Entgegenhaltungen:
- EP-A- 0 280 305
- EP-A- 0 466 134
- GB-A- 2 276 493
- US-A- 4 079 404
- US-A- 5 179 609
- PATENT ABSTRACTS OF JAPAN vol. 9, no. 85 (E-308) (1808) 13. April 1985 & JP,A,59 217 380 (FUJITSU) 7. Dezember 1984

## Beschreibung

Die Erfindung betrifft ein elektrooptisches Modul mit einem Träger, bei dem auf einer Oberseite in einer Linie mehrere elektrooptische Elemente fixiert sind und bei dem auf derselben Oberseite in einer weiteren Linie entsprechend mehrere Aufnahmen ausgebildet sind, in denen Linsen den elektrooptischen Elementen gegenüberliegend fixiert sind, um die elektrooptischen Elemente mit weiteren optischen Elementen zu koppeln.

Ein aus der EP-Al-0 506 438 bekanntes elektrooptisches Modul umfaßt eine elektrooptische Einheit ("LED-Array") mit vielen auf einem Halbleiterplättchen in einer Linie nebeneinander in einem vorgegebenen Raster beabstandeten lichtemittierenden Dioden (LED). Die elektrooptische Einheit ist auf der Oberfläche eines ersten Trägers fixiert. Eine entsprechende Anzahl von Linsen ist in demselben Rasterabstand in einer Linie in einem separaten Linsenträger ("Linsen-Array") angeordnet, der auf einem weiteren Träger fixiert ist. Dieser ist auf einer Grundplatte befestigt und gegenüber der elektrooptischen Einheit derart ausgerichtet, daß aus den LED austretendes Licht in Lichtwellenleiterenden eingekoppelt wird. Das Modul kann zum optischen Anschluß sog. Faserbänder dienen, die z. B. bei einem Rasterabstand von 250 µm 12 einzelne parallel verlaufende Lichtwellenleiter (Kanäle) aufweisen. Schon ein geringer Versatz des zweiten Trägers gegenüber dem ersten Träger führt zu erheblich verschlechterten Kopplungseigenschaften. Deshalb erfordert das aus verhältnismäßig vielen einzelnen Komponenten zusammengesetzte bekannte Modul einen sehr hohen Positionier- und Justageaufwand.

Aus der EP-Al-0 529 947 ist ein elektrooptisches Modul mit mehreren individuellen elektrooptischen Elementen bekannt, die auf einem ersten Träger angeordnet sind. Eine entsprechende Anzahl von Linsen ist auf einem zweiten Träger den elektrooptischen Elementen gegenüberliegend angeordnet. Die einander zugewandten Oberflächen der Träger weisen korrespondierende Vertiefungen auf, in die Ausrichtkugeln einsetzbar sind. Damit erfolgt eine beabstandete Ausrichtung des zweiten Trägers mit von ihm aufgenommenen Lichtwellenleiterenden und den Linsen gegenüber dem ersten Träger. Eine präzise Positionierung der elektrooptischen Elemente erfolgt durch individuelles Ausrichten der elektrooptischen Elemente bezüglich der Vertiefungen des ersten Trägers. Dazu wird zur Kontaktierung und Fixierung der Elemente auf dem ersten Träger vorab aufgebrachtes Lot kurzzeitig verflüssigt.

Die EP-Al-0 280 305 offenbart ein elektrooptisches Modul der eingangs genannten Art mit einem Träger, auf dessen Oberseite mehrere individuelle elektrooptische Elemente in einer Linie in einem vorgegebenen Rasterabstand angeordnet sind. Den elektrooptischen Elementen liegen auf derselben Trägeroberseite in entsprechender Anzahl Linsen zur Kopplung der Elemente mit Lichtwellenleiterenden gegenüber. Zur Halterung der Linsen sind im Rasterabstand ausgebildete Aufnahmen zwischen den elektrooptischen Elementen und den auf derselben Trägeroberseite angeordneten bzw. zu dieser ausgerichteten Lichtwellenleiterenden vorgesehen. Zur exakten Positionierung der individuellen elektrooptischen Elemente ist bei dem bekannten Modul eine aktive Justage unter Inbetriebnahme der elektrooptischen Elemente vorgesehen. Dazu ist jedoch für jedes individuelle elektrooptische Element eine elektrische Kontaktierung und eine Positionierung mit Hilfe eines dreidimensionalen Manipulators erforderlich.

Die Aufgabe der Erfindung liegt daher in der Schaffung eines einfach und mit wenigen Einzelteilen herstellbaren elektrooptischen Moduls mit einem besonders hohen Kopplungswirkungsgrad zwischen den elektrooptischen Elementen und den anzukoppelnden optischen Elementen oder Lichtwellenleiterenden bei geringstem Justageaufwand; insbesondere soll auf eine aktive Justage (unter Betrieb der elektrooptischen Elemente) verzichtet werden können.

Diese Aufgabe wird erfindungsgemäß bei einem elektrooptischen Modul der eingangs genannten Art dadurch gelöst, daß die elektrooptischen Elemente in einer elektrooptischen Einheit enthalten sind und daß auf derselben Oberseite des Trägers zumindest zwei aus der Linie der Aufnahmen heraus zur elektrooptischen Einheit hin versetzte Ausricht-Aufnahmen ausgebildet sind, die jeweils einen als mechanischer Anschlag für die elektrooptische Einheit dienenden Körper aufnehmen. Das erfindungsgemäße Modul kommt dadurch vorteilhafterweise mit relativ wenigen einzelnen Komponenten aus. Da die Linsen und die mechanischen Anschläge unmittelbar auf der Oberfläche des Trägers angeordnet sind, auf der auch die elektrooptische Einheit fixiert ist, können besonders geringe Lagetoleranzen zwischen den Linsen untereinander und zu den elektrooptischen Elementen eingehalten werden. Als Trägermaterialien sind insbesondere Halbleitermaterialien geeignet, deren Oberflächen mit planaren Methoden strukturierbar sind. Durch die gut beherrschbare Masken- und Ätztechnik können die Aufnahmen für die Linsen und die Ausricht-Aufnahmen - vorzugsweise gleichzeitig in einem gemeinsamen Sturkturierungsvorgang - mit hoher Präzision in Massenfertigung hergestellt werden.

Dadurch werden die optisch wirksamen Abstände zu den Linsen präzise festgelegt, wobei nur noch eine seitliche Verschiebung der elektrooptischen Einheit möglich ist. Eine diesbezügliche Justage kann ohne Betreiben der elektrooptischen Elemente beispielsweise unter einem Mikroskop erfolgen. Durch Veränderung der Positionen der weiteren Aufnahmen können die Kopplungsverhältnisse zwischen den übrigen Linsen und der elektrooptischen Einheit und den Lichtwellenleiterenden zur Erzielung des jeweils günstigsten Kopplungswirkungsgrads für Einmoden- und Mehrmoden-Lichtwellenleiter festgelegt werden. Das erfindungsgemäße Modul ist sowohl zur Kopplung mit anderen korrespondierenden optischen Elementen als auch mit Lichtwellenleiterenden geeignet.

Eine fertigungstechnisch besonders vorteilhafte Ausgestaltung der Erfindung sieht vor, daß die Linsen und die Körper Kugellinsen sind und daß die Aufnahmen Ausnehmungen in dem Träger sind.

Eine vorteilhafte Fortbildung der Erfindung besteht darin, daß die Kugellinsen auf zwischen den Ausnehmungen und der Oberseite des Trägers gebildeten Kanten aufliegen. Damit ist die Lage der Linsen durch (punktförmige) Kontakte mit den Kanten der Ausnehmungen bestimmt und die tieferliegenden Konturen der Ausnehmungen, insbesondere die Oberflächenqualität und -neigung, bleiben ohne Einfluß auf die Positionen der Linsen. Besonders präzise lassen sich die Kanten durch Maskentechniken herstellen.

Eine hinsichtlich der Kontaktierung der elektrooptischen Elemente bevorzugte Weiterbildung der Erfindung besteht darin, daß auf den Träger Metallstrukturen zum elektrischen Anschluß der elektrooptischen Elemente aufgebracht sind.

Ein Ausführungsbeispiel der Erfindung wird nachfolgend anhand einer Zeichnung näher erläutert; es zeigen:
Figur 1 die Ansicht eines elektrooptischen Moduls und
Figur 2 einen Schnitt entlang der Linie II-II in Figur 1.

Das elektrooptische Modul enthält eine elektrooptische Einheit 1, die mehrere (beispielsweise 12) elektrooptische Elemente 1a, 1b, 1c, 1d, 1e, 1f, 1g, 1h, 1i, 1j, 1k und 1l umfaßt. Die Elemente la bis 11 sind in z. B. aus der EP-Al-0 506 438 bekannter Weise in einem einzigen Halbleiterstreifen 2 in Form einzelner lichtemittierender Dioden (LED) ausgebildet und in einer Linie 4 und in einem vorgegebenen Rasterabstand 5 von beispielsweise 250 µm beabstandet. Die Einheit 1 ("LED-Array") ist auf einer Oberseite 6 eines Trägers 7 durch Löten und/oder Kleben fixiert.

Eine der Anzahl der Elemente 1a bis 11 entsprechende Anzahl (z. B. 12) nur andeutungsweise dargestellter Aufnahmen in Form von pyramidenförmigen Ausnehmungen 9a, 9b, 9c, 9d, 9e, 9f, 9g, 9h, 9i, 9j, 9k und 91 ist auf derselben Oberfläche 6 des Trägers 7 entlang einer Reihe oder Linie 10 ausgebildet. Die Ausnehmungen 9a bis 91 sind in dem aus Siliziummaterial geeigneter Orientierung bestehenden Träger 7 in an sich bekannter Maskenätztechnik durch anisotropes Ätzen in demselben Rasterabstand 5 erzeugt, in dem auch die Elemente la bis 11 beabstandet sind. Gleichzeitig mit den Ausnehmungen 9a bis 91 sind in an sich bekannter Ätztechnik in dieselbe Oberfläche 6 des Trägers 7 zwei weitere (nur andeutungsweise dargestellte) pyramidenförmige Ausricht-Ausnehmungen 20a, 20b erzeugt worden, die mit ihren Zentren 21a, 21b vor die Linie 10 der Ausnehmungen 9a bis 9l zu der Einheit 1 hin versetzt sind.

In jeder Ausnehmung 9a bis 9l ist jeweils eine Kugellinse 24a bis 241 einer Linseneinheit 24 und in den beiden weiteren Ausnehmungen 20a, 20b jeweils ein Anschlag-Körper in Form einer Kugellinse 25a, 25b z. B. durch Löten mit Glaslot, anodisches Bonden oder Kleben unmittelbar fixiert. Die Kugellinsen 25a, 25b sind aufgrund der gegenüber der Linie 10 vorgesetzten Zentren 21a, 21b der Ausricht-Ausnehmungen 20a, 20b zur Einheit 1 hin versetzt und dienen jeweils als mechanischer Anschlag 28, 29 für die Einheit ("LED-Array") 1. Die elektrooptischen Elemente la bis 11 sind mit Metallstrukturen 30 durch Löten und Drahtbonden elektrisch kontaktierbar, die unmittelbar auf den Träger 7 aufgebracht sind.

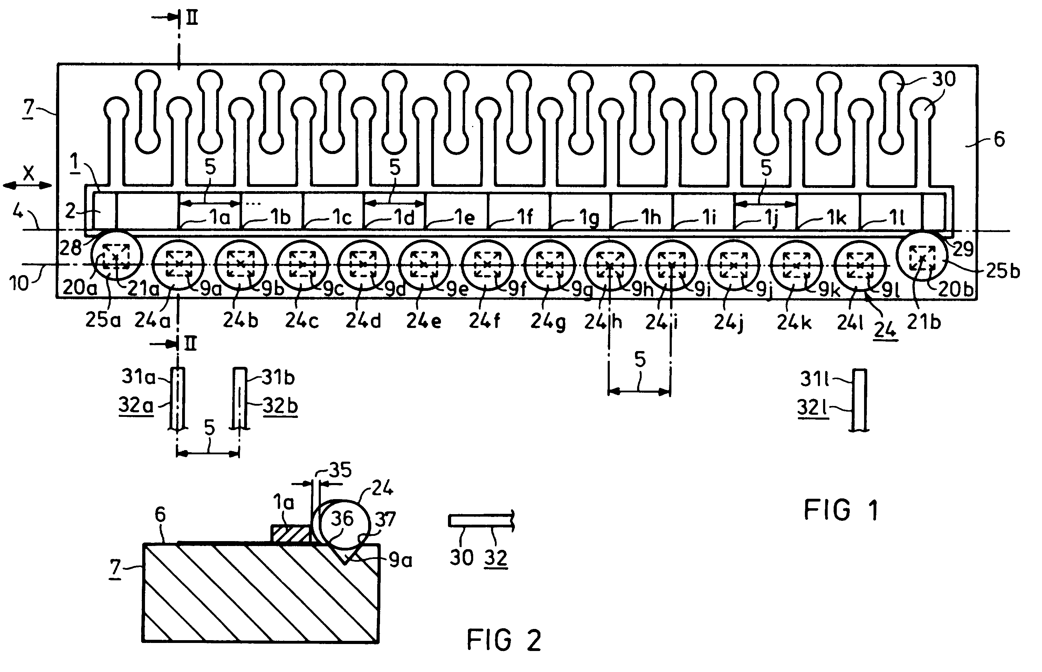

Die Elemente la bis 11 sind über die ihnen jeweils zugeordneten, gegenüberliegenden Kugellinsen 24a bis 24l mit optischen Elementen in Form von Lichtwellenleiterenden koppelbar. Figur 1 zeigt andeutungsweise nur drei Lichtwellenleiterenden 31a, 31b, 31l von Lichtwellenleitern 32a, 32b, 32l, die ebenfalls im vorgegebenen Rasterabstand 5 von z. B. 250 µm beabstandet parallel verlaufen und im wesentlichen in einer gemeinsamen Ebene angeordnet sind. Die (z. B. 12) Lichtwellenleiterenden 31a, 31b, 31l können in für sich aus der US-PS 4,998,796 bekannter Art in einem Mehrfach-Lichtwellenleiterstecker in einander zugewandten V-Nuten gegenüberliegender Siliziumplättchen fixiert sein.

Das elektrooptische Modul weist einen besonders hohen Kopplungswirkungsgrad bei vergleichsweise wenigen Einzelkomponenten auf, weil die einzelnen Kugellinsen auf demselben Träger wie die Einheit 1 ("LED-Array") angeordnet sind. Durch die gemeinsame Ausbildung der die Position der Kugellinsen 24a bis 24l bestimmenden Ausnehmungen 9a bis 9l mit den weiteren, die Position der als Anschlag dienenden Kugellinsen 25a, 25b bestimmenden Ausnehmungen 20a, 20b auf dem gemeinsamen Träger 7 können sehr enge Positionstoleranzen eingehalten werden. Die an den Enden der Reihe oder Linie 10 angeordneten weiteren Linsen 25a, 25b sind gegenüber der Linie 10 der Zentren der übrigen Linsen 24a bis 24l exakt um einen gewünschten Betrag 35 versetzt. Die Linsen liegen nur an Kanten (36, 37) auf, die zwischen der Oberfläche 6 und den Ausnehmungen 9a bis 91 und 20a, 20b gebildet sind (Figur 2). Durch Anpassung der Brennweiten und Linsenabstände können für Einmoden- und Mehrmoden-Lichtwellenleiter die jeweils optimalen Kopplungsverhältnisse eingestellt werden. Bei der Montage des Moduls werden zuerst die Linsen 24a bis 24l; 25a, 25b in den Vertiefungen 9a bis 9l; 20a, 20b fixiert und dann die Einheit 1 auf den Träger 7 aufgesetzt. Durch die Anschläge 28, 29 ist die Einheit 1 bis auf den Freiheitsgrad in Richtung X vorpositioniert. Eine Justage der elektrooptischen Einheit 1 in seitlicher Richtung X kann ohne aktiven Betrieb der elektrooptischen Elemente 1a bis 1l unter einem Mikroskop durchgeführt werden.

## Patentansprüche

1. Elektrooptisches Modul mit einem Träger (7),
- bei dem auf einer Oberseite (6) in einer Linie (4) mehrere elektrooptische Elemente (1a bis 1l) fixiert sind und
- bei dem auf derselben Oberseite (6) in einer weiteren Linie (10) entsprechend mehrere Aufnahmen (9a bis 9l) ausgebildet sind, in denen Linsen (24a bis 24l) den elektrooptischen Elementen (1a bis 1l) gegenüberliegend fixiert sind, um die elektrooptischen Elemente (1a bis 1l) mit weiteren optischen Elementen zu koppeln,
**dadurch gekennzeichnet, daß**
die elektrooptischen Elemente (1a bis 1l) in einer elektrooptischen Einheit (1) enthalten sind und daß auf derselben Oberseite (6) des Trägers (7) zumindest zwei aus der Linie (10) der Aufnahmen (9a bis 9l) heraus zur elektrooptischen Einheit (1) hin versetzte Ausricht-Aufnahmen (20a, 20b) ausgebildet sind, die jeweils einen als mechanischer Anschlag (28, 29) für die elektrooptische Einheit (1) dienenden Körper (25a, 25b) aufnehmen.

2. Modul nach Anspruch 1,
**dadurch gekennzeichnet , daß**
die Linsen (24a bis 24l; 25a, 25b) und die Körper (25a,25b) Kugellinsen sind und daß die Aufnahmen (9a bis 9l; 20a, 20b) Ausnehmungen in dem Träger (7) sind.

3. Modul nach Anspruch 2,
**dadurch gekennzeichnet, daß**
die Kugellinsen (24a bis 24l / 25a, 25b) auf zwischen den Ausnehmungen (9a bis 9l; 20a, 20b) und der Oberseite (6) des Trägers (7) gebildeten Kanten (36,37) aufliegen.

4. Modul nach einem der vorangehenden Ansprüche,
**dadurch gekennzeichnet, daß** , auf
den Träger (7) Metallstrukturen (30) zum elektrischen Anschluß der elektrooptischen Elemente (1a bis 1l) aufgebracht sind.

## Claims

1. An electro-optical module with a carrier (7)
- wherein on a surface (6) a plurality of electro-optical elements (1a to 1l) are fixed in a line (4) and
- wherein on the same surface (6) a corresponding number of holders (9a, to 9l) are formed in a further line (10), in which holders lenses (24a to 24l) are fixed opposite the electro-optical elements (1a to 1l) in order to couple the electro-optical elements (1a to 1l) to further optical elements,
characterised in that the electro-optical elements (1a to 1l) are contained in an electro-optical unit (1) and that on the same surface (6) of the carrier (7) there are formed at least two aligning holders (20a, 20b) which are offset out of the line (10) of holders (9a to 9l) towards the electro-optical unit (1) and which in each case accommodate a body (25a, 25b), serving as mechanical stop means (28, 29), for the electro-optical unit (1).

2. A module according to Claim 1, characterised in that the lenses (24a to 24l; 25a, 25b) and the bodies (25a, 25b) are spherical lenses, and that the holders (9a to 9l; 20a, 20b) are recesses in the carrier (7).

3. A module according to Claim 2, characterised in that the spherical lenses (24a to 24l / 25a, 25b) are supported on edges (36, 37) formed between the recesses (9a to 9l; 20a, 20b) and the surface (6) of the carrier (7).

4. A module according to one of the preceding claims, characterised in that metallic structures (30) for the electrical connection of the electro-optical elements (1a to 1l) are applied to the carrier (7).

## Revendications

1. Module électrooptique comportant un support (7),
- dans lequel plusieurs éléments (1a à 1l) électrooptiques sont immobilisés sur une ligne (4) sur une face (6) supérieure et
- dans lequel il est ménagé sur la même face (6) supérieure, sur une ligne (10) supplémentaire, plusieurs empreintes (9a à 9l) de réception correspondantes, dans lesquelles des lentilles (24a à 24l) sont immobilisées en face des éléments (1a à 1l) électrooptiques, afin de coupler les éléments (1a à 1l) électrooptiques à des éléments optiques supplémentaires,
caractérisé en ce que les éléments (1a à 1l) électrooptiques sont contenus dans une unité (1) électrooptique et en ce qu'il est ménagé sur la même face (6) du support (7) au moins deux empreintes (20a, 20b) de réception et d'orientation, qui sont décalées de la ligne (10) des empreintes (9a à 9l) de réception en direction de l'unité (1) électrooptique et qui recoivent chacune un élément (25a, 25b) servant de butée (28, 29) mécanique à l'unité (1) électrooptique.

2. Module suivant la revendication 1,
caractérisé en ce que les lentilles (24a à 24l; 25a, 25b) et les éléments (25a,25b) sont des lentilles sphériques et en ce que les empreintes (9a à 9l; 20a, 20b) de réception sont des évidements ménagés dans le support (7).

3. Module suivant la revendication 2,
caractérisé en ce que les lentilles (24a à 24l; 25a, 25b) sphériques reposent sur des arêtes (36,37) formées entre les évidements (9a à 9l; 20a, 20b) et la face (6) supérieure du support (7).

4. Module suivant l'une des revendications précédentes,
caractérisé en ce qu'il est monté sur le support (7) des structures (30) métalliques servant au raccordement électrique des éléments (1a à 1l) électrooptiques.
